# EUROPÄISCHE PATENTSCHRIFT

(11) **EP 0 591 894 B1**
(45) Veröffentlichungstag und Bekanntmachung des Hinweises auf die Patenterteilung: **29.12.1997**
(21) Anmeldenummer: 93116005.5
(22) Anmeldetag: 04.10.1993
(51) Int. Cl.: B01D 29/09, B01D 33/04

(54) **Anlage zum Filtern von Flüssigkeiten**
Plant for filtering liquids
Installation pour filtrer des liquides

(30) Priorität: 05.10.1992 DE 9213328 U
(43) Veröffentlichungstag der Anmeldung: 13.04.1994
(73) Patentinhaber: GF TECHNIK, 72820 Sonnenbühl (DE)
(72) Erfinder: Früh, Fritz M., D-72820 Sonnenbühl (DE)
(74) Vertreter: Möbus, Rudolf, Dipl.-Ing.

(56) Entgegenhaltungen:
- FR-A- 468 763
- FR-A- 1 352 960
- US-A- 2 489 454
- US-A- 2 885 080
- PATENT ABSTRACTS OF JAPAN, Band 10, Nr. 230 (C-365)(2286), 09 August 1986
- TECHNISCHE RUNDSCHAU, Band 77, Nr. 22, Mai 1985, Bern (CH); Seiten 18-19

## Beschreibung

Die Erfindung betrifft eine Anlage zum Filtern von Kühlschmiermitteln von Werkzeugmaschinen nach dem Oberbegriff des Anspruches 1.

In der EP 0 353 340 A1 ist eine Filteranlage zur Reinigung von Kühlschmiermitteln beschrieben, die ein endloses Transportband für den sich während der Filterung bildenden Filterkuchen, der die eigentliche Filterwirkung hervorruft, aufweist. Das Band ist dabei über eine Vielzahl von Umlenkwalzen geführt. Im Einlaufbereich des zu reinigenden Schmiermittels wird das Band über ein Lochsieb gezogen. An dieser Stelle ist das Band also einer erhöhten Reibung ausgesetzt. Außerdem ist zu befürchten, daß sich Stahlspäne zwischen dem Lochsieb und dem Band ansammeln und dieses an der Unterseite verletzen.

Die in der EP 0 407 363 beschriebene selbstreinigende Kühlmittelfilteranlage weist ebenfalls ein über eine Vielzahl von Transport- und Umlenkwalzen geführtes Band auf, das im Reinigungsbereich über einen Filterscreen geführt ist, so daß sich hier ebenfalls die oben beschriebenen Nachteile ergeben.

Die FR 1 352 960 beschreibt eine Anordnung zur Reinigung von klebrigen Flüssigkeiten, wie sie in der Tomatenkonservenindustrie, in Gerbereien oder in der Textilindustrie anfallen. Die Anordnung besteht aus einem endlosen, über zwei Walzen geführten Band, das aus gelenkig verbundenen Metallplatten besteht. Die Platten weisen jeweils trichterförmige Öffnungen auf, wobei Öffnungen mit einem in die Flüssigkeit vorstehenden Rand versehen sind. Hiermit wird die Flüssigkeit nach Schmutzpartikeln durchkämmt. Diese verhaken sich an den Öffnungsrändern und werden nach außen transportiert. Eine Filterung von Kühlschmiermitteln ist mit dieser Anordnung nicht möglich.

Der vorliegenden Erfindung liegt die Aufgabe zugrunde, eine Filteranlage zur Filterung von verschmutzten Kühlschmiermitteln zu schaffen, die konstruktiv einfach ist und die obengenannten Nachteile vermeidet.

Die Aufgabe wird mit einer Anlage mit den Merkmalen des Anspruches 1 gelöst. Die erfindungsgemäße Anlage arbeitet selbstreinigend. Ist das Filterband im Einlaufbereich der zu filternden Flüssigkeit mit Schmutzpartikeln zugesetzt, so wird das Band weitertransportiert, bis bereits wieder gereinigtes Filterband in den Einlaufbereich der Flüssigkeit gelangt. Das verschmutzte Filterbandstück wird zu der Reinigungseinrichtung weitertransporteirt und von Schmutzpartikeln vollständig befreit, so daß es in einem späteren Zyklus wieder zur Filterung einsatzfähig ist. Die gesamte Filterung läuft durch den Schwimmerschalter gesteuert vollautomatisch ab. Ein Austausch des Filterbandes ist überhaupt nicht oder nur nach sehr langen Laufzeiten erforderlich. Dabei gestaltet sich der Austausch des Bandes aufgrund der Lagerung der Transportwalzen an einem verschwenkbaren Rahmenteil einfach und problemlos. Die erfindungsgemäße Anlage ist darüber hinaus konstruktiv sehr einfach und damit preiswert in der Herstellung. Die aus Kühlschmiermitteln ausgefilterten Metallpartikelchen können anschließend durch Einschmelzen in einem Hochofen wiederverwendet werden. Weitere Vorteile ergeben sich durch die Merkmale der Unteransprüche.

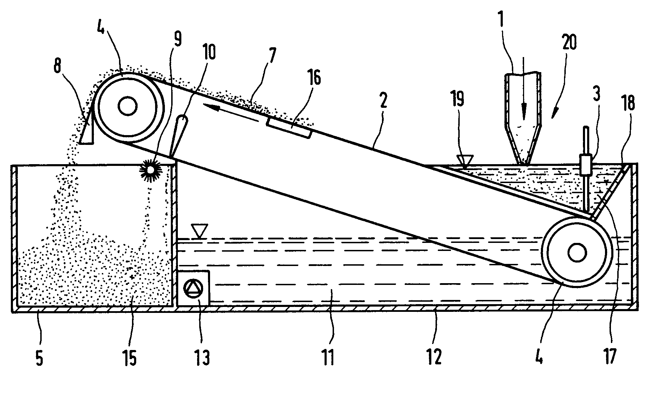

Nachfolgend wird ein bevorzugtes Ausführungsbeispiel einer erfindungsgemäßen Anlage anhand der Zeichnung näher erläutert.

Die einzige Figur zeigt einen Längsschnitt durch eine Anlage zur Reinigung von Kühlschmiermitteln für spanabhebende Maschinen. Es ist ein endloses Filterband 2 dargestellt, das über zwei Transportwalzen 4 geführt ist. Die Transportwalzen 4 sind dabei so angeordnet, daß das Filterband 2 geneigt zur Horizontalen verläuft. Der Neigungswinkel ist dabei so bestimmt, daß Verunreinigungen auf der Filterbandoberfläche nicht vom Filterband heruntergleiten können. Das Filterband 2 bildet zusammen mit gegen das Filterband 2 abgedichteten Seitenwandungen 18 einen Einlaufbehälter 17 für zu filterndes Kühlschmiermittel 1, das zur Kühlung, Schmierung und zum Abtransport von Spänen und dergleichen an Werkzeugmaschinen verwendet und von diesen der Filteranlage zugeleitet wird. Das verschmutzte Kühlschmiermittel 1 fließt in einem Einlaufbereich 20 in den Einlaufkasten 17 und durch das Endlosfilterband 2, das die Verunreinigungen zurückhält, zu einem Auffangbehälter 12. Durch Ansammlung der Verunreinigungen auf dem Endlosfilterband 2 bildet sich mit der Zeit ein Filterkuchen 7, der die Durchflußgeschwindigkeit des verschmutzten Kühlschmiermittels 1 allmählich verringert. Dadurch steigt der Flüssigkeitsspiegel 19 im Einlaufkasten 17 an. Mit dem Flüssigkeitsspiegel 19 wird auch ein im Einlaufkasten 17 angeordneter Schwimmer mit Schalter 3 angehoben, der bei einer bestimmten Höhe des Flüssigkeitsspiegels 19 einen Antriebsmotor 13 für mindestens eine der beiden Transportwalzen 4 betätigt. Durch die Transportwalzen 4 wird das Filterband 2 aus dem Einlaufkasten 17 in Richtung auf einen Schmutzsammelbehälter 5 gefördert. Dadurch gelangt ein bereits wieder gesäubertes Stück des Endlosfilterbandes 2 in den Bereich des Einlaufbehälters 17, und die Durchflußgeschwindigkeit des verunreinigten Kühlschmiermittels 1 steigt wieder an, wodurch sich der Flüssigkeitsspiegel 19 und der Schwimmer 3 wieder absenken. Der Schalter des Schwimmers 3 schaltet den Antriebsmotor 13 dadurch wieder aus. Das Filterband 2 kommt wieder zum Stillstand, und der auf dem Filterband 2 liegende Filterkuchen 7 kann abtropfen und von einem Warmluftgebläse 16 vollständig getrocknet werden. Beim nächsten Transportzyklus des Filterbandes 2 wird der Filterkuchen durch einen Abstreifer 8 in den Schmutzsammelbehälter 5 befördert. Anschließend wird das solchermaßen vorgereinigte Filterband 2 mit einer Walzenbürste 9 von Restschmutz befreit. Mit einer der Walzenbürste nachgeordneten Ausblasdüse 10 auf der Innenseite des Filterbandes 2 wird das Endlosfilterband 2 anschließend bis zur vollständigen Sauberkeit ausgeblasen. Der Antrieb der Walzenbürste 9 und der Ausblasdüse 10 sind dabei mit dem Antrieb 13 der Transportwalzen 4 gekoppelt und nur solange in Betrieb, wie auch das Endlosfilterband 2 in Bewegung ist. Auch eine waagrechte Anordnung des Filterbandes ist möglich. Doch wäre dann kein Weitertransport des Bandes ohne Unterbrechung des Filterungsprozesses möglich.

Die Reinigung des Endlosfilterbandes 2 der dargestellten Anlage erfolgt vollautomatisch und in Abhängigkeit von der Menge der Verunreinigungen des Kühlschmierstoffes 1, die sich bereits auf dem Filterband 2 abgelagert hat. Je dicker der Filterkuchen 7 auf dem Filterband 2 ist, je höher ist auch der Reinheitsgrad des Filtrates 11. Das Filtrat 11 wird anschließend aus dem Auffangbehälter 12 mit einer Pumpe zur Maschine zurückgepumpt. Weitere Vorteile ergeben sich, wenn die im Sammelbehälter 5 aufgefangenen Schmutzpartikel 15 gepreßt und damit vollständig von Flüssigkeit befreit werden. Die dadurch erhaltenen Schmutzpartikeltabletten enthalten bei Verunreinigungen von spanabhebenden Werkzeugmaschinen zu 99 % Metallbestandteile und können in einem Hochofen wieder eingeschmelzt werden. Der Sammelbehälter 5 kann auch auswechselbar an der Anlage angeordnet sein, um bei Bearbeitung von Werkstücken aus unterschiedlichen Materialien dennoch homogene Schmutzpartikel 15 zu erhalten.

Sollte das zweckmäßigerweise aus einem Metallgewebe gefertigte Endlosfilterband doch einmal verschleißen, so können zur Erleichterung seines Auswechselns die beiden Transportwalzen 4 mit einem Ende an einem gemeinsamen, senkrecht zur Transportrichtung des Filterbandes 2 derart verschwenkbaren Rahmenteil der Anlage, daß das Filterband 2 zum Auswechseln über die freien Enden der Transportwalzen 4 von diesen einfach abziehbar ist, gelagert sein. Das verbrauchte Filterband aus Metallgewebe kann anschließend gemeinsam mit den ebenfalls aus Metall bestehenden Schmutzpartikeln 15 entsorgt werden.

## Patentansprüche

1. Anlage zum Filtern von Kühlschmiermitteln von Werkzeugmaschinen mit einem Einlaufbereich für die zu filternde Flüssigkeit, einem darunter angeordneten Filter und einem Auffangbehälter für das Filtrat, wobei das Filter als angetriebenes endloses Band ausgebildet ist und außerhalb des Einlaufbereiches für zu filternde Flüssigkeit eine Reinigungseinrichtung für das Filterband vorgesehen ist, dadurch gekennzeichnet, daß das Filterband (2) über zwei Transportwalzen (4) geführt ist, von denen eine angetrieben ist und die mit einem Ende an einem gemeinsamen, senkrecht zur Transportrichtung des Filterbandes (2) derart verschwenkbaren Rahmenteil der Anlage, daß das Filterband zum Auswechseln über die freien Enden der Transportwalzen (4) von diesen abziehbar ist, gelagert sind, und daß das Filterband (2) im Einlaufbereich (20) für die zu filternde Flüssigkeit (1) zusammen mit gegen das Filterband (2) abgedichteten Seitenwandungen (18) der Anlage einen Einlaufbehälter (17) für die zu filternde Flüssigkeit (1) bildet, und daß der Einlaufbehälter (17) einen Schwimmschalter (3) aufweist, der mit dem Antrieb (13) des Filterbandes (2) verbunden ist.

2. Anlage nach Anspruch 1, dadurch gekennzeichnet, daß die Reinigungseinrichtung einen sich quer zur Transportrichtung des Filterbandes (2) erstreckenden Abstreifer (8) für die Filterbandoberfläche, eine Walzenbürste (9) sowie eine von der Filterbandrückseite einwirkende Ausblasdüse (10) aufweist.

3. Anlage nach Anspruch 2, dadurch gekennzeichnet, daß der Antrieb der Walzenbürste (9) und der Ausblasdüse (10) mit dem Antrieb (13) des Filterbandes (2) gekoppelt ist.

4. Anlage nach einem der Ansprüche 1 bis 3, dadurch gekennzeichnet, daß ein auswechselbarer Sammelbehälter (5) für die mittels der Reinigungseinrichtung (8, 9, 10) vom Filterband (2) entfernten Schmutzpartikel (15) vorgesehen ist.

5. Anlage nach einem der Ansprüche 1 bis 4, dadurch gekennzeichnet, daß eine Presse für die Schmutzpartikel (15) vorgesehen ist.

6. Anlage nach einem der Ansprüche 1 bis 5, dadurch gekennzeichnet, daß zwischen dem Einlaufbereich (20) für die zu filternde Flüssigkeit (1) und der Reinigungseinrichtung (8, 9, 10) ein gegen das Filterband (2) gerichtetes Warmluftgebläse (16) angeordnet ist.

7. Anlage nach einem der Ansprüche 1 bis 6, dadurch gekennzeichnet, daß das Filterband (2) aus einem Metallgewebe gefertigt ist.

## Claims

1. An installation for filtering cooling lubricants of machine tools, having an inlet region for the liquid to be filtered, a filter disposed underneath, and a catchment vessel for the filtrate, wherein the filter is constructed as a driven endless belt and a cleaning device for the filter belt is provided outside the inlet region for liquid to be filtered, characterised in that the filter belt (2) is passed over two conveyor rollers (4), one of which is driven, which are mounted at one end on a common frame part of the installation which can swivel perpendicularly to the direction of conveying of the filter belt (2) in such a way that the filter belt can be pulled off the conveyor rolls (4) over the free ends thereof for replacement, and that in the inlet region (20) for the liquid (1) to be filtered the filter belt (2), together with sidewalls (18) of the installation, which are sealed against the filter belt (2), forms an inlet vessel (17) for the liquid (1) to be filtered, and that the inlet vessel (17) has a float switch (3) which is connected to the drive (13) of the filter belt (2).

2. An installation according to claim 1, characterised in that the cleaning device comprises a stripping device (8), which extends transversely to the direction of conveying of the filter belt (2), for the filter belt surface, a revolving brush (9), and a blow-out nozzle (10) which acts from the pressure side of the filter belt.

3. An installation according to claim 2, characterised in that the drive of the revolving brush (9) and of the blow-out nozzle (10 is coupled to the drive (13) of the filter belt (2).

4. An installation according to any one of claims 1 to 3, characterised in that a replaceable collecting vessel (5) is provided for the contaminant particles (15) removed from the filter belt (2) by means of the cleaning device (8, 9, 10).

5. An installation according to any one of claims 1 to 4, characterised in that a press is provided for the contaminant particles (15).

6. An installation according to any one of claims 1 to 5, characterised in that a hot air fan (16), which is oriented towards the filter belt (2), is disposed between the inlet region (20) for the liquid (1) to be filtered and the cleaning device (8, 9, 10).

7. An installation according to any one of claims 1 to 6, characterised in that the filter belt (2) is manufactured from a metallic woven fabric.

## Revendications

1. Installation pour filtrer des agents de refroidissement et de lubrification de machines-outils, avec une zone d'entrée pour le liquide à filtrer, un filtre disposé dessous et un réservoir récepteur pour le filtrat, le filtre étant conçu sous la forme d'une bande sans fin entraînée, et un dispositif de nettoyage pour la bande filtrante étant prévu à l'extérieur de la zone d'entrée pour le liquide à filtrer, caractérisée en ce que la bande filtrante (2) est guidée au moyen de deux tambours de transport (4) dont l'un est entraîné et qui sont montés, par une extrémité, sur une partie de bâti commune de l'installation, pouvant basculer perpendiculairement au sens de transport de la bande filtrante (2), de façon que la bande filtrante puisse être retirée des extrémités libres des tambours de transport (4) par celles-ci pour être remplacée, et en ce que, dans la zone d'entrée (20) pour le liquide à filtrer (1), la bande filtrante (2) forme, conjointement avec des parois latérales (18) de l'installation étanchées par rapport à la bande filtrante (2), un réservoir d'entrée (17) pour le liquide à filtrer (1), et en ce que le réservoir d'entrée (17) comporte un commutateur flottant (3) qui est relié au moyen d'entraînement (13) de la bande filtrante (2).

2. Installation selon la revendication 1, caractérisée en ce que le dispositif de nettoyage comporte, pour la surface de la bande filtrante, une racle (8) s'étendant transversalement à la direction de transport de la bande filtrante (2), une brosse à rouleau (9) ainsi qu'une buse soufflante (10) agissant sur la face arrière de la bande filtrante.

3. Installation selon la revendication 2, caractérisée en ce que le moyen d'entraînement de la brosse à rouleau (9) et de la buse soufflante (10) est couplé au moyen d'entraînement (13) de la bande filtrante (2).

4. Installation selon l'une des revendications 1 à 3, caractérisée en ce qu'un réservoir collecteur interchangeable (5) est prévu pour les particules d'impuretés (15) retirées de la bande filtrante (2) au moyen du dispositif de nettoyage (8, 9, 10).

5. Installation selon l'une des revendications 1 à 4, caractérisée en ce qu'une presse est prévue pour les particules d'impuretés (15).

6. Installation selon l'une des revendications 1 à 5, caractérisée en ce qu'une soufflante d'air chaud (16) dirigée vers la bande filtrante (2) est disposée entre la zone d'entrée (20) pour le liquide à filtrer (1) et le dispositif de nettoyage (8, 9, 10).

7. Installation selon l'une des revendications 1 à 6, caractérisée en ce que la bande filtrante (2) est réalisée en tissu métallique.
